# EUROPEAN PATENT SPECIFICATION

(11) **EP 1 227 560 B1**
(45) Date of publication and mention of the grant of the patent: **25.07.2012**
(21) Application number: 02447012.2
(22) Date of filing: 28.01.2002
(51) Int. Cl.: H02G 7/05

(54) **A clamp for attaching overhead lines**
Abspannklemme für Freileitungen
Pince d'ancrage pour lignes aériennes

(30) Priority: 29.01.2001 FR 0101384
(43) Date of publication of application: 31.07.2002
(73) Proprietor: SAAE MALICO Connectors International, en abrégé "SM-CI", 27000 Evreux (FR)
(72) Inventor: Allaire, Xavier, 27930 Guichainville (FR); Corbel, Kristen, 27000 Evreux (FR)
(74) Representative: Cornet, Nicolas Yves Pascal

(56) References cited:
- US-A- 4 872 626
- US-A- 5 073 680

## Description

The present invention relates to a clamp for attaching overhead lines, in particular electrical conductors, electrical cables, telephone cables, etc.

The document FR 2 606 560 discloses a clamp for attaching electrical cables.

It has been found that overhead lines using clamps as described in the above document are damaged by storms, ice accumulating on the cables, falling trees, etc. The damage includes the breaking of posts or pylons, for example, or even breaking of the cable, which can cause a fire, cut off an electricity supply or cut off telephone lines.

The present invention aims to remedy such problems and proposes a system which reduces or even completely eliminates the risk of pylons, posts or cables breaking in the event of storms, build-up of ice, trees falling, etc.

The invention therefore provides a system which, in the event of problems creating an excessive tension or overload on the post or pylon, etc., enables one or more clamps (with the attached cables) to deform (absorbing a high force, but with no risk of damage to the post or pylon), or even to be detached from one or more posts or pylons (in the event of excessive forces that could damage the post or pylon), the system thereby preventing the posts or pylons from being subjected to excessive forces that could destroy them.

The clamp for attaching electrical cables, telephone cables or supporting cables, is provided or equipped with an attachment cord fitted with at least one retaining ferrule, said cord extending between a first hole or housing of the clamp and a second hole or housing or fixing means of the clamp to form a closed loop.

According to the invention, the clamp, its body and/or the cord is fitted with first means for opening the loop if the cord is subjected to a force greater than a first predetermined force and second means allowing at least a portion of the cord to move relative to the clamp or its body (without opening the loop) if the cord is subjected to a force greater than a second predetermined force less than or equal to the first predetermined force, advantageously less than the first predetermined force.

Thus the clamp in accordance with the invention absorbs some forces by sliding or movement of the cord relative to the body of the clamp, whereas for other forces the clamp and/or the cord are deformed and allow the loop to open, allowing the electrical cables to drop to the ground.

In one embodiment the second means of the clamp and/or the cord allow lengthening of the loop if the cord is subjected to a force greater than a second predetermined force less than or equal to the first predetermined force, advantageously less than the first predetermined force.

In particular, the second predetermined force is from 25% to 90%, advantageously from 35% to 80%, and preferably from 50% to 75% of the first force.

In a preferred embodiment the cord is fitted with a first ferrule constituting the first means and a second ferrule constituting the second means.
The cord then advantageously has a first section forming a loop between a first hole or housing or fixing means of the clamp and a second hole or housing or fixing means of the clamp and a second section extending the first section beyond the first hole or housing or fixing means of the clamp, said second section being fitted with said second ferrule, said second ferrule sliding along the second section or the second section sliding relative to the second ferrule if the cord is subjected to a force greater than a second predetermined force less than or equal to the first predetermined force, preferably less than the first predetermined force.

In this embodiment, for a second predetermined force equal to the first predetermined force, the first and second ferrules move toward each other for a force equal to or greater than the first predetermined force. If the force applied is less than the first predetermined force when the first ferrule abuts against the second ferrule the first ferrule does not break and the loop is not opened but if the force applied is equal to or greater than the first predetermined force when the first ferrule abuts against the second ferrule the first ferrule breaks and the loop is therefore opened.

The second section is preferably provided with said first ferrule, the second ferrule being situated between said first ferrule and the first hole or housing or fixing means (or an abutment of the fixing means) of the clamp, the second section sliding relative to the second ferrule to move the first ferrule toward the second ferrule if the cord is subjected to a force greater than a second predetermined force, equal to or less than the first force, preferably less than the first force.

In one advantageous embodiment of the invention the cord has a first section forming a loop between a first hole or housing or fixing means of the clamp and a second hole or housing or fixing means of the clamp and a second section extending the first section beyond the first hole or housing or fixing means of the clamp, the first ferrule co-operating with the second hole or housing or fixing means and the second ferrule co-operating with the first hole or housing or fixing means of the clamp.

According to one advantageous feature, the second ferrule is calibrated so that it breaks or separates from the cord at a traction force of more than 500 DaN, (decaNewtons) advantageously from 600 to 1 000 DaN, preferably of approximately 800 DaN.

According to another advantageous feature, the first ferrule is calibrated so that it breaks or separates from the cord at a traction force of more than 800 DaN, advantageously from 1 000 to 1 600 DaN, preferably of approximately 1 200 DaN.

The invention also provides a cord for a clamp according to the invention, said cord having at least a first ferrule fastened to said cord with a first force and a second ferrule fastened to said cord with a force equal to or less than said first force, preferably less than said first force. The second ferrule is placed between an end portion adapted to be fixed or attached to the body of the clamp and the first ferrule. Thus in the event of high forces the second ferrule can therefore slide along the cord toward the first ferrule or the cord can slide relative to the second ferrule to move the first and second ferrules toward each other.

The invention further provides an overhead line in which one or more electrical or telephone cables are connected to one or more posts or pylons by means of one or more clamps according to the invention.

Features and details of the invention will emerge from the following detailed description, which refers to the accompanying drawings.
In the drawings:
- figure 1 is a perspective view of a clamp according to the invention, and
- figure 2 is a perspective view of the cord from the figure 1 clamp.

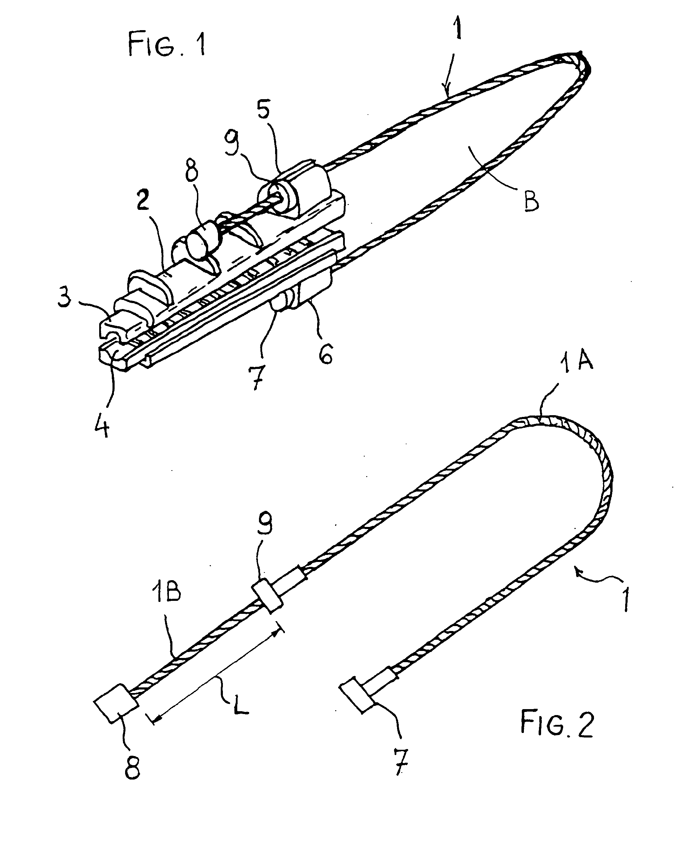

Figure 1 shows one embodiment of a clamp according to the invention (this embodiment is shown by way of example only).
The clamp, which is of the type described in FR 2 606 560, includes:
- a lashing member or cord 1;
- a split sheath 2 having a conical opening with a small cone angle in which slides a compressible core 3 having a cavity 4 with jaws for receiving and retaining (clamping) an electrical conductor, a telephone cable or a supporting cable;
- a first support 5 mounted on the top face of the sheath 2, the support 5 having a central passage and a slot extending between said central passage and the outside wall of the support 5; and
- a second support 6 mounted on the bottom face of the sheath 2, the support 6 having a central passage and a slot extending between said central passage and the outside wall of the support 6.
The cord 1 carries:
- a first retaining ferrule 7 crimped to a free end of the cord with a force of more than 1 500 DaN (decaNewtons), said ferrule being attached to the support 6 to prevent all or substantially all movement of the ferrule relative to the support;
- a fusible second ferrule 8 crimped to the other end of the cord with a force of approximately 1 200 DaN; and
- a fusible third ferrule 9 which has a central channel and is crimped to the cable between the ferrules 7 and 8 with a force of approximately 800 DaN, said ferrule 9 being attached to the support 5 to prevent all or substantially all movement of the ferrule 9 relative to the support 5.

The cord has a first section 1A between the crimped ferrules 7 and 9, this section forming the attachment loop B, and a second section 1B between the crimped ferrules 8 and 9. The second section has a length L of at least 20 cm, advantageously at least 40 cm, for example approximately 60 cm.

If a force of more than 800 DaN (decaNewtons) is applied to the cord 1, the crimping of the ferrule 9 is degraded and allows the ferrule 9 to move relative to the cord 1. The section 1B slides in the central channel of the ferrule 9 and this increases the total length of the loop B by the length L of the second section 1B. Thus the function of this ferrule 9 is to resist a calibrated force (for example 800 DaN) and to absorb a force greater than the calibrated force (through degradation of the crimping and sliding). This is particularly advantageous if a high but localised force is applied to the cord, for example by a strong gust of wind.

If a force of more than 1 200 DaN (the calibration force of the fusible ferrule 8) is applied to the cord for a long period of time, initially the crimping of the ferrule 9 is degraded and the ferrule 8 moves toward the ferrule 9, after which the crimping of the fusible ferrule 8 is degraded, the ferrule separates 8 from the cord, and the loop B finally opens, enabling the electrical cable or cables to drop out.

This therefore prevents the risk of damage to the posts or pylons and even to the cable. The cord as such has a breaking load of more than 1 400 DaN, for example more than 2 000 DaN, in particular approximately 2 500 DaN.

If the clamp according to the invention is subjected to a localised high force, the loop B is lengthened. Simple visual examination can therefore identify clamps that have been subjected to localised high forces and must be replaced.

It is clear that many modifications are feasible.
For example, it is possible to provide on the section 1B one or more intermediate ferrules, similar to the ferrule 9, for example, the intermediate ferrules absorbing successive localised forces.

It would also have been possible to substitute for the ferrule 7 a section of cord associated with ferrules 9 and 8.

In one advantageous embodiment the ferrule 7 from figure 1 is calibrated to break at a force equal to or greater than 1 200 DaN and the ferrules 8 and 9 from figure 1 respectively resist a force of more than 1 200 DaN and is calibrated at 800 DaN.

The cord shown takes the form of strands twisted together. However, other types of cord could have been used, the cords having a cross-section of diverse shapes (round, oval, square, rectangular, etc.).

## Claims

1. A clamp for attaching electrical cables, telephone cables or supporting cables, provided or equipped with an attachment cord (1) fitted with at least one retaining ferrule (7), said cord (1) extending between a first hole or housing of the clamp and a second hole or housing or fixing means of the clamp to form a closed loop (B),
**characterised in that** the clamp, its body and/or the cord is fitted with first means (8) for opening the loop (B) if the cord (1) is subjected to a force greater than a first predetermined force and second means (9) allowing at least a portion (1B) of the cord to move relative to the clamp or its body if the cord is subjected to a force greater than a second predetermined force less than or equal to the first predetermined force.

2. A clamp according to claim 1, **characterised in that** the second means (9) of the clamp and/or the cord (1) allow lengthening of the loop (B) if the cord is subjected to a force greater than a second predetermined force less than or equal to the first predetermined force.

3. A clamp according to claim 1 or claim 2, **characterised in that** the second predetermined force is from 25% to 90%, advantageously from 35% to 80%, and preferably from 50% to 75% of the first predetermined force.

4. A clamp according to any preceding claim, **characterised in that** the cord (1) is fitted with a first ferrule (8) constituting the first means and a second ferrule (9) constituting the second means.

5. A clamp according to the preceding claim, **characterised in that** the cord (1) has a first section (1A) forming a loop (B) between a first hole or housing or fixing means (5) of the clamp and a second hole or housing or fixing means (6) of the clamp and a second section (1B) extending the first section (1A) beyond the first hole or housing or fixing means (5) of the clamp, said second section (1B) being fitted with said second ferrule (9), said ferrule (9) sliding along the second section or the second section (1B) sliding relative to the second ferrule (9) if the cord (1) is subjected to a force greater than a second predetermined force less than the first predetermined force.

6. A clamp according to the preceding claim, **characterised in that** the cord (1) has a first section (1A) forming a loop (B) between a first hole or housing or fixing means (5) of the clamp and a second hole or housing or fixing means (6) of the clamp and a second section (1B) extending the first section (1A) beyond the first hole or housing or fixing means (5) of the clamp, the first ferrule (8) co-operating with the second hole or housing or fixing means (6) of the clamp and the second ferrule (9) co-operating with the first hole or housing or fixing means (5) of the clamp.

7. A clamp according to any of claims 4 to 6, **characterised in that** the second ferrule (9) is calibrated so that it breaks or separates from the cord (1) at a traction force of more than 500 DaN, advantageously from 600 to 1 000 DaN, preferably of approximately 800 DaN.

8. A clamp according to any of claims 4 to 7, **characterised in that** the first ferrule (8) is calibrated so that it breaks or separates from the cord at a traction force of more than 800 DaN, advantageously from 1 000 to 1 600 DaN, preferably of approximately 1 200 DaN.

9. A cord for a clamp according to any preceding claim, said cord having at least a first ferrule (8) fastened to said cord with a first force and a second ferrule (9) fastened to said cord with a force equal to or less than said first force, preferably less than said first force.

10. An overhead line in which one or more electrical or telephone cables are connected to one or more posts or pylons by means of one or more clamps according to any of claims 1 to 8.

## Patentansprüche

1. Klammer zum Befestigen von Elektrokabeln, Telefonkabeln und Tragseilen, die versehen oder ausgestattet ist mit einem Befestigungsseil (1), das mit mindestens einer Haltezwinge (7) ausgerüstet ist, wobei sich das Seil (1) zwischen einem ersten Loch oder Gehäuse der Klammer und einem zweiten Loch oder Gehäuse oder Fixierungsmittel der Klammer erstreckt, um eine geschlossene Schleife (B) auszubilden, **dadurch gekennzeichnet, dass** die Klammer, ihr Körper und/oder das Seil ausgerüstet sind mit einem ersten Mittel (8) zum Öffnen der Schleife (B), wenn auf das Seil (1) eine Kraft ausgeübt wird, die größer als eine erste vorgegebene Kraft ist, und mit einem zweiten Mittel (9), das es ermöglicht, dass sich mindestens ein Teil (1B) des Seils bezüglich der Klammer oder ihres Körpers bewegt, wenn auf das Seil eine Kraft ausgeübt wird, die größer als eine zweite vorgegebene Kraft ist, die kleiner als die oder gleich der ersten vorgegebenen Kraft ist.

2. Klammer nach Anspruch 1, **dadurch gekennzeichnet, dass** das zweite Mittel (9) der Klammer und/oder des Seils (1) ein Verlängern der Schleife (B) ermöglicht, wenn auf das Seil eine Kraft ausgeübt wird, die größer als eine zweite vorgegebene Kraft ist, die kleiner als die oder gleich der ersten vorgegebenen Kraft ist.

3. Klammer nach Anspruch 1 oder Anspruch 2, **dadurch gekennzeichnet, dass** die zweite vorgegebene Kraft von 25% bis zu 90%, vorteilhafterweise von 35% bis zu 80% und vorzugsweise von 50% bis zu 75% der ersten vorgegebenen Kraft beträgt.

4. Klammer nach einem der vorhergehenden Ansprüche, **dadurch gekennzeichnet, dass** das Seil (1) ausgerüstet ist mit einer ersten Zwinge (8), welche das erste Mittel bildet, und einer zweiten Zwinge (9), welche das zweite Mittel bildet.

5. Klammer nach einem der vorhergehenden Ansprüche, **dadurch gekennzeichnet, dass** das Seil (1) aufweist:
einen ersten Abschnitt (1A), der eine Schleife (B) zwischen einem ersten Loch oder Gehäuse oder Fixierungsmittel (5) der Klammer und einem zweiten Loch oder Gehäuse oder Fixierungsmittel (6) der Klammer ausbildet, und einen zweiten Abschnitt (1B), der den ersten Abschnitt (1A) über das erste Loch oder Gehäuse oder Fixierungsmittel (5) der Klammer hinaus verlängert, wobei der zweite Abschnitt (1B) mit der zweiten Zwinge (9) ausgerüstet ist, wobei die Zwinge (9) entlang des zweiten Abschnittes gleitet oder der zweite Abschnitt (1B) bezüglich der zweiten Zwinge (9) gleitet, wenn auf das Seil (1) eine Kraft ausgeübt wird, die größer als eine zweite vorgegebene Kraft ist, die kleiner als die erste vorgegebene Kraft ist.

6. Klammer nach einem der vorhergehenden Ansprüche, **dadurch gekennzeichnet, dass** das Seil (1) aufweist:
einen ersten Abschnitt (1A), der eine Schleife (B) zwischen einem ersten Loch oder Gehäuse oder Fixierungsmittel (5) der Klammer und einem zweiten Loch oder Gehäuse oder Fixierungsmittel (6) der Klammer ausbildet, und einen zweiten Abschnitt (1B), der den ersten Abschnitt (1A) über das erste Loch oder Gehäuse oder Fixierungsmittel (5) der Klammer hinaus verlängert, wobei die erste Zwinge (8) mit dem zweiten Loch oder Gehäuse oder Fixierungsmittel (6) der Klammer zusammenwirkt und wobei die zweite Zwinge (9) mit dem ersten Loch oder Gehäuse oder Fixierungsmittel (5) der Klammer zusammenwirkt.

7. Klammer nach einem der Ansprüche 4 bis 6, **dadurch gekennzeichnet, dass** die zweite Zwinge (9) so eingestellt ist, dass sie bei einer Zugkraft von mehr als 500 daN, vorteilhafterweise von 600 bis 1000 daN, vorzugsweise von ungefähr 800 daN öffnet oder sich vom Seil (1) löst.

8. Klammer nach einem der Ansprüche 4 bis 7, **dadurch gekennzeichnet, dass** die erste Zwinge (8) so eingestellt ist, dass sie bei einer Zugkraft von mehr als 800 daN, vorteilhafterweise von 1000 bis 1600 daN, vorzugsweise von ungefähr 1200 daN öffnet oder sich vom Seil löst.

9. Klammer nach einem der vorhergehenden Ansprüche, wobei das Seil mindestens aufweist: eine erste Zwinge (8), die mit einer ersten Kraft an dem Seil befestigt ist, und eine zweite Zwinge (9), die mit einer Kraft an dem Seil befestigt ist, die gleich der oder kleiner als die erste Kraft, vorzugsweise kleiner als die erste Kraft ist.

10. Freileitung, in der eine oder mehrere elektrische oder Telefonkabel mithilfe einer oder mehrerer Klammern nach einem der Ansprüche 1 bis 8 an einem oder mehreren Säulen oder Masten befestigt sind.

## Revendications

1. Pince d'ancrage pour câbles électriques, câbles téléphoniques ou câbles de support, pourvue ou équipée d'un cordon d'ancrage (1) doté d'au moins un embout de rétention (7), ledit cordon (1) s'étendant entre un premier trou ou logement de la pince et un deuxième trou ou logement ou moyen de fixation de la pince pour former une boucle fermée (B),
**caractérisée en ce que** la pince, son corps et/ou le cordon sont dotés d'un premier moyen (8) pour ouvrir la boucle (B) si le cordon (1) est soumis à une force supérieure à une première force prédéterminée et d'un deuxième moyen (9) permettant à au moins une portion (1B) du cordon de se déplacer par rapport à la pince ou à son corps si le cordon est soumis à une force supérieure à une deuxième force prédéterminée inférieure ou égale à la première force prédéterminée.

2. Pince selon la revendication 1, **caractérisée en ce que** le deuxième moyen (9) de la pince et/ou du cordon (1) permet l'allongement de la boucle (B) si le cordon est soumis à une force supérieure à une deuxième force prédéterminée inférieure ou égale à la première force prédéterminée.

3. Pince selon la revendication 1 ou 2, **caractérisée en ce que** la deuxième force prédéterminée est de 25 % à 90 %, de manière avantageuse de 35 % à 80 %, et de préférence de 50 % à 75 % de la première force prédéterminée.

4. Pince selon l'une quelconque des revendications précédentes, **caractérisée en ce que** le cordon (1) est doté d'un premier embout (8) constituant le premier moyen et d'un deuxième embout (9) constituant le deuxième moyen.

5. Pince selon la revendication précédente, **caractérisée en ce que** le cordon (1) a une première section (1A) formant une boucle (B) entre un premier trou ou logement ou moyen de fixation (5) de la pince et un deuxième trou ou logement ou moyen de fixation (6) de la pince et une deuxième section (1B) étendant la première section (1A) au-delà du premier trou ou logement ou moyen de fixation (5) de la pince, ladite deuxième section (1B) étant dotée dudit deuxième embout (9), ledit embout (9) coulissant le long de la deuxième section ou la deuxième section (1B) coulissant par rapport au deuxième embout (9) si le cordon (1) est soumis à une force supérieure à une deuxième force prédéterminée inférieure à la première force prédéterminée.

6. Pince selon la revendication précédente, **caractérisée en ce que** le cordon (1) a une première section (1A) formant une boucle (B) entre un premier trou ou logement ou moyen de fixation (5) de la pince et un deuxième trou ou logement ou moyen de fixation (6) de la pince et une deuxième section (1B) étendant la première section (1A) au-delà du premier trou ou logement ou moyen de fixation (5) de la pince, le premier embout (8) coopérant avec le deuxième trou ou logement ou moyen de fixation (6) de la pince et le deuxième embout (9) coopérant avec le premier trou ou logement ou moyen de fixation (5) de la pince.

7. Pince selon l'une quelconque des revendications 4 à 6, **caractérisée en ce que** le deuxième embout (9) est étalonné de manière à se rompre ou se séparer du cordon (1) à une force de traction supérieure à 500 DaN, de manière avantageuse de 600 à 1000 DaN, de préférence d'environ 800 DaN.

8. Pince selon l'une quelconque des revendications 4 à 7, **caractérisée en ce que** le premier embout (8) est étalonné de manière à se rompre ou se séparer du cordon à une force de traction supérieure à 800 DaN, de manière avantageuse de 1000 à 1600 DaN, de préférence d'environ 1200 DaN.

9. Cordon pour une pince selon l'une quelconque des revendications précédentes, ledit cordon ayant au moins un premier embout (8) fixé sur ledit cordon avec une première force et un deuxième embout (9) fixé sur ledit cordon avec une force inférieure ou égale à ladite première force, de préférence inférieure à ladite première force.

10. Ligne aérienne dans laquelle un ou plusieurs câbles électriques ou téléphoniques sont reliés à un ou plusieurs poteaux ou pylônes au moyen d'une ou plusieurs pinces selon l'une quelconque des revendications 1 à 8.
